# FASCICULE DE BREVET EUROPEEN

(11) **EP 0 774 020 B1**
(45) Date de publication et mention de la délivrance du brevet: **21.04.1999**
(21) Numéro de dépôt: 95925893.0
(22) Date de dépôt: 17.07.1995
(51) Int. Cl.: D06M 15/263, D06M 15/507, D06M 15/693

(54) **PROCEDE POUR L'ENCOLLAGE DE FILS OU DE FIBRES TEXTILES AU MOYEN D'UNE COMPOSITION LATEX**
VERFAHREN ZUM SCHLICHTEN VON GARNEN ODER TEXTILFASERN MITTELS EINER LATEXZUSAMMENSETZUNG
METHOD FOR SIZING YARNS OR TEXTILE FIBRES USING LATEX COMPOSITION

(30) Priorité: 22.07.1994 FR 9409087
(43) Date de publication de la demande: 21.05.1997
(73) Titulaire: RHODIA CHIMIE, 92408 Courbevoie Cédex (FR)
(72) Inventeur: PECATE, Nicole, F-78360 Montesson (FR); VIDIL, Christine, F-69360 Communay (FR)
(74) Mandataire: Fabre, Madeleine-France
(86) Numéro de dépôt international: FR9500953
(87) Numéro de publication internationale: WO9603544

(56) Documents cités:
- EP-A- 0 052 949
- EP-A- 0 333 547
- EP-A- 0 540 374
- US-A- 4 233 196
- DATABASE WPI Section Ch, Week 7529 Derwent Publications Ltd., London, GB; Class A87, AN 75-48233W & JP,A,49 101 689 ( MATSUMOTO OIL & FAT LTD) , 26 Septembre 1974 cité dans la demande
- DATABASE WPI Section Ch, Week 8642 Derwent Publications Ltd., London, GB; Class A14, AN 86-275657 & JP,A,61 201 079 ( YUSHIRO KAGAKU KOGYO KK) , 5 Septembre 1986 cité dans la demande

## Description

La présente invention a pour objet un procédé pour l'encollage de fils ou de fibres textiles à l'aide d'un latex.

II est connu d'utiliser dans l'industrie textile des produits d'encollage, afin d'améliorer, lors du tissage, la résistance à l'abrasion des fils et des fibres, lesdits produits d'encollage étant éliminés à l'eau après tissage.

Il a été proposé d'utiliser comme çomposition d'encollage, des solutions alcalines de copolymères obtenus par copolymérisation en émulsion d'esters (méth)acryliques et d'acide (métha)crylique en présence d'un polyester sulfoné hydrodispersable (JP-B-50-34153 et JP-A-61-201079).

II a également été proposé des solutions alcalines de copolymères obtenus par copolymérisation en émulsion d'une composition monomère à base d'acétate de vinyle, d'acide (méth)acrylique et d'esters (meth)acryliques contenant de l'acrylate de butyle, en présence d'un polyester sulfoné hydrodispersable, l'acrylate de butyle représentant de 12 à 25 % en poids de ladite composition monomère (EP-A-333547). Cette dernière référence mentionne la possibilité d'utiliser la dispersion de copolymère (latex) issue directement de l'opération de polymérisation, au lieu d'une solution alcaline de ladite dispersion, comme composition d'encollage, sans cependant donner d'exemple. Toutefois il a été constaté qu'une composition d'encollage à base de ces copolymères sous forme latex a tendance à générer du "blocking" ("blocking on beams" - recollage sur ensouple).

Il est connu (US-A-4,394,128) d'encoller les fils textiles polyester à l'aide d'un latex de copolymère vinylique de masse moléculaire de l'ordre de 300,000 à 2,500,000, dérivant d'une composition monomère constituée de styrène et/ou méthacrylate de méthyle et d'acide acrylique et/ou méthacrylique. Des compositions d'encollage à base de ces latex ont des propriétés de cohésion peu intéressantes.

La demanderesse a maintenant trouvé un procédé d'encollage à l'aide d'un latex de copolymères, au moins aussi performant que ceux mettant en oeuvre des solutions alcalines de copolymères de l'art antérieur.

Selon l'invention, il s'agit d'un procédé d'encollage des chaînes de fils (yarns) textiles tel que défini dans la revendication 1.

Pour une bonne réalisation de l'invention, l'ensemble macromoléculaire est favorablement constitué d'environ 95 à 50 parties, de préférence d'environ 90 à 60 parties et tout particulièrement d'environ 90 à 75 parties en poids de copolymère (meth)acrylique en mélange avec ou au moins partiellement greffé sur environ 5 à 50 parties, de préférence environ 10 à 40 parties et tout particulièrement environ 10 à 25 parties en poids de polyester sulfoné hydrodispersable.

La teneur en matières sèches du latex peut être de l'ordre de 5 à 50 % en poids, de préférence de l'ordre de 20 à 45 % en poids.

Parmi les monomères pouvant entrer dans la composition monomère à base d'au moins un ester acrylique et/ou méthacrylique et d'au moins un acide carboxylique éthyléniquement insaturé, on peut citer
- comme esters acryliques ou méthacryliques, les acrylates ou méthacrylates d'alkyle en C₁-C₂₀, notamment ceux de méthyle, éthyle, butyle, hexyle ...
- comme acides carboxyliques éthyléniquement insaturés, les acides acrylique, méthacrylique, crotonique, maleïque, fumarique, itaconique ...

A coté de ces monomères, peuvent être présents d'autres comonomères tels que notamment les esters insaturés d'acides carboxyliques saturés, tels que l'acétate de vinyle, le propionate de vinyle, le butyrate de vinyle, le stéarate de vinyle, le benzoate de vinyle,..., le styrène, l'acrylonitrile, l'acrylamide ...

La nature et les quantités relatives des différents constituants de la composition monomère sont choisies de façon telle que la dureté PERSOZ de l'ensemble macromoléculaire du latex d'encollage corresponde à celle définie ci-dessus. Ces paramètres peuvent être aisément déterminés par l'homme de métier; en effet, il est connu que l'ajout de styrène ou de méthacrylate de méthyle par exemple conduit à un polymère plus dur, tandis que l'ajout d'acrylate de butyle ou d'hexyle conduit à l'effet inverse.

D'une manière préférentielle la composition monomère mise en oeuvre contient de l'ordre de 25 à 70%, et tout particulièrement de l'ordre de 40 à 60% de son poids d'acrylate de butyle.

Les polyesters sulfonés hydrodispersables mis en oeuvre pour obtenir le latex d'encollage, sont des produits bien connus du domaine de l'encollage textile.

Ils peuvent être préparés par cocondensation d'un diacide organique (tel qu'un diacide aliphatique saturé ou insaturé, un diacide aromatique, un diacide présentant plusieurs noyaux aromatiques, un diacide arylaliphatique), l'un de ses diesters ou son anhydride et d'un diacide organique sulfoné ou l'un de ses diesters avec un diol, en présence d'un catalyseur habituel de polyestérification, tel que l'orthotitanate de tétra isopropyle. Comme monomères de départ couramment utilisés pour la préparation dudit polyester hydrodispersable, on peut citer, en tant que :
- diacides organiques : les diacides saturés ou insaturés, les diacides aromatiques, tels que les acides succinique, adipique, subérique, sébacique, maleïque, fumarique, itaconique, orthophtalique, isophtalique, téréphtalique, les anhydrides de ces acides et leurs diesters comme les diesters méthyliques éthyliques, propyliques, butyliques ...; les composés préférés sont les acides adipique, orthophtalique, isophtalique, téréphalique ou leurs diesters méthyliques;
- diacides organiques sulfonés : les diacides sulfonates de sodium ou leurs diesters, tels que les dialcoylisophtalates et dialcoylsulfosuccinates comme le diméthylisophtalate -5 sulfonate de sodium ou le diméthylsulfosuccinate de sodium;
- diols : les glycols aliphatiques, tels que l'éthylèneglycol, le diéthylèneglycol, le dipropylèneglycol et les homologues supérieurs, le butanediol-1,4, l'hexanediol-1,6 ,le neopentylglycol et les glycols cylaniques, tels que le cyclohexanediol, le dicyclohexanediolpropane; les diols choisis préférentiellement sont l'ethylèneglycol et le diéthylèneglycol.

Des exemples de polyesters sulfonés hydrodispersables bien adaptés à la présente invention, ont été décrits dans les brevets US-A-3 734 874 ; 3 779 993 ; 4 233 196; FR-B-1 401 581 ; EP-A-540 374.

On peut mentionner tout particulièrement ceux dérivant de l'estérification et /ou transestérification de l'acide téréphtalique et/ou isophtalique ou de leur diester méthylique et de l'acide sulfoisophtalique ou de son diester méthylique, avec du monoéthylène glycol et/ou diéthylène glycol, et polycondensation.

Les polyesters sulfonés hydrodispersables présentent de préférence une masse moléculaire moyenne en nombre (mesurée par chromatographie par perméation de gel, dans un vecteur solvant comme le diméthylacétamide ou la N-méthylpyrrolidone, contenant 5x10⁻³ N de LiBr ; les résultats étant exprimés en équivalents polystyrène) de l'ordre de 15 000 à 35 000, tout particulièement de l'ordre de 20 000 à 35 000, un indice d'acide inférieur à 5mg de KOH/g, un taux de soufre de l'ordre de 0,8 à 2% en poids, tout particulièrement de l'ordre de 1,5 à 2% en poids.

Le latex d'encollage mis en oeuvre selon l'invention, peut être obtenue par polymérisation en émulsion aqueuse de la composition monomère, ledit polyester sulfoné hydrodispersable étant soit ajouté à la dispersion (latex) de copolymère (meth)acrylique obtenue après polymérisation, soit introduit au cours de l'opération de polymérisation en émulsion aqueuse de la composition monomère.

La composition monomère mise en oeuvre contient de préférence de l'ordre de 25 à 70% , et de préférence de l'ordre de 40 à 60% en poids d'acrylate de butyle.

La quantité de polyester sulfoné hydrodispersable additionnée au latex de copolymère acrylique et/ou méthacrylique ou introduite au cours de l'opération de polymérisation en émulsion de la composition monomère, est favorablement de l'ordre de 5 à 50 parties, de préférence de l'ordre de 10 à 40 parties et tout partiulièrement de l'ordre de 10 à 25 parties en poids pour 95 à 50 parties, de préférence de 90 à 60 parties et tout particulièrement de 90 à 75 parties en poids de copolymère (meth)acrylique ou de composition monomère.

Ladite opération de polymérisation en émulsion aqueuse peut être réalisée de manière classique, en présence d'un amorceur de polymérisation choisi parmi les amorceurs solubles ou dispersables dans l'eau ou dans la composition monomère, d'un émulsifiant et éventuellement d'un agent limiteur de chaîne.
L'amorceur peut être représenté par les hydropéroxydes, tels que l'eau oxygénée, l'hydropéroxyde de cumène, l'hydroperoxyde de tertiobutyle, l'hydropéroxyde de diisopropylbenzène, et les persulfates tels que le persulfate de sodium, le persulfate de potassium, le persulfate d'ammonium ; il peut être employé en quantités comprises entre 0,05 et 2% en poids par rapport à la composition monomère. Ces amorceurs sont éventuellement associés à un réducteur, tel que les bisulfite et le formaldéhydesulfoxylate de sodium, les polyéthylèneamines, les sucres (dextrose, saccharose), les sels métalliques. La quantité de réducteur utilisée peut varier entre 0 et 3% en poids par rapport au poids de la composition monomère.

En tant qu'agent émulsifiant, on peut citer notamment les acides gras, les alkylsulfates, les alkylsulfonates, les alkylarylsulfonates, les sulfosuccinates, les alkylphosphates de métaux alcalins, les sels de l'acide abiétique hydrogéné ou non, les alcools gras polyéthoxylés éventuellement sulfatés ou phosphatés, les alkylphénols polyéthoxylés éventuellement sulfatés ou phosphatés, les acides gras polyéthoxylés ...; ils peuvent être utilisés à raison d'environ 0,01 à 5% en poids par rapport au poids de la composition monomère.

L'agent limiteur de chaîne peut éventuellement être mis en oeuvre dans des proportions pouvant aller de 0 à environ 3% en poids par rapport à la composition monomère ; il est généralement choisi parmi les mercaptans tels que le n-dodécylmercaptan, le tertiodécylmercaptan, le cyclohexène, les hydrocarbures halogénés tels que le chloroforme, le bromoforme, le tétrachlorure de carbone, le tétrabromure de carbone, les dimères de l'alphaméthylstyrène.

L'opération de polymérisation peut être réalisée à une température de l'ordre de 60 à 80°C, de préférence de l'ordre de 70°C ; cette opération peut durer de l'ordre de 4 à 12 heures, et généralement de l'ordre de 6 à 8 heures.

La dispersion aqueuse (latex) de l'ensemble macromoléculaire, ainsi obtenue, peut, si nécessaire, être diluée, afin que la composition d'encollage faisant l'objet de l'invention présente un taux d'extrait sec de l'ordre de 5 à 30% en poids, ce en fonction du taux de colle désiré sur le fil et de la méthode d'encollage utilisée.

Le procédé selon l'invention peut être mis en oeuvre pour l'encollage de fils ou de fibres textiles, en particulier sur métier jet d'eau ou sur métiers secs en atmosphère humide.

La chaîne obtenue après encollage est alors prête à être tissée.

Parmi les méthodes d'encollage pour fil continu (filament yarn ou continuous filament yarn), on peut citer l'encollage sectionnel (european system), l'encollage conventionnel (classic system ou english system) et l'encollage en nappe primaire (single end sizing ou japan system) ...

II a été constaté que le latex mis en oeuvre selon le procédé de l'invention, présente un indice de cohésion élevé, et n'a pas tendance à générer de "blocking" ("blocking on beams" - recollage sur ensouple) lors du réunissage des ensouples primaires ou du déroulement de la bobine de l'ensouple sur le métier.

La procédé d'encollage de l'invention est tout particulièrement intéressante pour apprêter les fils (filament yarns) synthétiques de polytéréphtalate d'éthylèneglycol, qui sont parmi les fils textiles (yarns) les plus difficiles à encoller, mais est également utilisables pour des fibres (spun yarns) de polyterephtalate d'éthylèneglycol mélangées avec des fibres naturelles, pour des fibres de verre ou pour d'autres fibres comme les fibres synthétiques telles que les fibres acryliques, les fibres polyimides, les chlorofibres, celles en polyéthylène, en polypropylène ou les fibres artificielles telles que fibres acétates, les fibres en triacétates, celles en viscose ...

De plus, il permet d'encoller n'importe quel type de fils, qu'ils soient texturés ou non, tordus ou non et selon n'importe quelle technique d'encollage, que ce soit de l'encollage en sectionnel, conventionnel, en nappe primaire ou autre.

Les exemples suivants sont donnés à titre illustratif.

### Exemple 1

On prépare comme suit une dispersion aqueuse d'un ensemble macromoléculaire obtenu à partir de 20 parties en poids d'un polyester sulfoné et de 80 parties en poids d'une composition monomère (parties en poids de matières sèches).
Dans un réacteur de 6 litres, muni d'un agitateur à ancre, on introduit:
- 868g d'eau
- 100g de Disperstat PE® (solution à 20% en poids d'ester phosphorique dispersant commercialisé par Stephenson Thompson Textile Chemicals)
- 2000g d'une dispersion aqueuse à 20% en poids d'extrait sec de GEROL PS 30®, polyester sulfoné commercialisé par RHONE-POULENC, présentant
   . une masse molaire moyenne en nombre de 22.000 environ
   . une masse molaire moyenne en poids de 60.000 environ
   . une dureté PERSOZ de 150 environ, mesurée selon la Norme AFNOR NFT 30-016 à 22°C et 85% d'humidité relative
   Le mélange est porté à 80°C, sous agitation à 150 tours/minute.
   On ajoute 7g de persulfate d'ammonium dissous dans 30g d'eau.
   On introduit en continu :
   * pendant 4 heures un mélange de
      - 960g d'acrylate de butyle (ABu)
      - 240g de styrène (S)
      - 400g d'acide méthacrylique (AMA)
      - 6g de dodécylmercaptan (DM)
   * pendant 4 heures un mélange de
      - 393g d'eau
      - 5,6g de persulfate d'ammonium
      - 100g de Disperstat PE® à 20% les deux introductions en continu démarrant simultanément.
      A la fin des introductions en continu, la température est maintenue pendant 1 heure à 80°C, puis on refroidit. On obtient un latex à 40% d'extrait sec.

L'ensemble macromoléculaire présente une dureté PERSOZ, mesurée selon la Norme AFNOR NFT 30-016 à 22°C et 85% d'humidité relative, de 160 environ. Le latex est réparti en plusieurs échantillons, chaque échantillon étant ensuite dilué à l'eau déminéralisée afin d'obtenir des taux d'extrait sec différents permettant de déposer sur le fil à encoller, des taux de colle variant entre 2 et 10%.

### Exemple 1' comparatif

Le latex présentant un taux d'extrait sec de 40% préparé à l'exemple 1, est alcali-solubilisé par addition d'une solution à 20% d'ammoniaque jusqu'à obtenir un pH de l'ordre de 7,5 à 8.
La solution obtenue est ensuite répartie en plusieurs échantillons, chaque échantillon étant ensuite dilué à l'eau déminéralisée afin d'obtenir des concentrations différentes permettant de déposer sur le fil à encoller, des taux de colle variant entre 2 et 10%.

### Exemple 2

On prépare selon le mode opératoire de l'exemple 1, une dispersion aqueuse à environ 40 % d'extrait sec d'un ensemble macromoléculaire obtenu à partir de 10 parties en poids du polyester sulfoné GEROL PS 30® de l'exemple 1 et de 90 parties en poids de la composition monomère de l'exemple 1 (parties en poids de matières sèches). L'ensemble macromoléculaire présente une dureté PERSOZ, mesurée selon la Norme AFNOR NFT 30-016 à 22°C et 85% d'humidité relative, de 165 environ. Le latex est réparti en plusieurs échantillons, chaque échantillon étant ensuite dilué à l'eau déminéralisée afin d'obtenir des taux d'extrait sec différents permettant de déposer sur le fil à encoller, des taux de colle variant entre 2 et 10%.

### Exemple 2' comparatif

Le latex présentant un taux d'extrait sec de 40% préparé à l'exemple 2, est alcali-solubilisé par addition d'une solution à 20% d'ammoniaque jusqu'à obtenir un pH de l'ordre de 7,5 à 8.
La solution obtenue est ensuite répartie en plusieurs échantillons, chaque échantillon étant ensuite dilué à l'eau déminéralisée afin d'obtenir des concentrations différentes permettant de déposer sur le fil à encoller, des taux de colle variant entre 2 et 10%.

### Exemple 3 comparatif

On prépare comme suit une dispersion aqueuse d'un ensemble macromoléculaire obtenu à partir de 23 parties en poids d'un polyester sulfoné et de 77 parties en poids d'une composition monomère (parties en poids de matières sèches). Dans un réacteur de 6 litres, muni d'un agitateur à ancre, on introduit:
- 2156g d'eau
- 1,5g de NANZA SB 62® à base de dodécylbenzénesulfonate de sodium, commercialisé par ALBRIGHT & WILSON
- 450g de GEROL PS 20® sec, polyester sulfoné commercialisé par RHONE-POULENC, présentant

· une masse molaire moyenne en nombre de 22.000 environ
· une masse molaire moyenne en poids de 60.000 environ
· une dureté PERSOZ de 80 environ, mesurée selon la Norme AFNOR NFT 30-016 à 22°C et 85% d'humidité relative
Le mélange est porté à 80°C, sous agitation à 150 tours/minute.
On ajoute 1,875g de persulfate d'ammonium dissous dans 20g d'eau.

On introduit en continu :
* pendant 5 heures un mélange de
- 600g d'acrylate de butyle (ABu)
- 300g d'acrylate d'éthyle (EA)
- 450g de méthacrylate de méthyle (MeMA)
- 75g d'acide méthacrylique (AMA)
- 75g d'acide acrylique (AA)
- 5,62g de tertiododécylmercaptan (TDDM)
* pendant 5 heures un mélange de
- 420g d'eau
- 7,5g de persulfate d'ammonium
- 30g de nonylphénol éthoxylé partiellement sulfaté les deux introductions en continu démarrant simultanément.
A la fin des introductions en continu, la température est maintenue pendant 1 heure à 80°C, puis on refroidit.
On obtient un latex à 43% d'extrait sec. L'ensemble macromoléculaire présente une dureté PERSOZ, mesurée selon la Norme AFNOR NFT 30-016 à 22°C et 85% d'humidité relative, de 22 environ. Le latex est réparti en plusieurs échantillons, chaque échantillon étant ensuite dilué à l'eau déminéralisée afin d'obtenir des taux d'extrait sec différents permettant de déposer sur le fil à encoller, des taux de colle variant entre 2 et 10%.

### Exemple 3' comparatif

Le latex présentant un taux d'extrait sec de 43% préparé à l'exemple 3, est alcali-solubilisé par addition d'une solution à 20% d'ammoniaque jusqu'à obtenir un pH de l'ordre de 7,5 à 8. La solution obtenue est ensuite répartie en plusieurs échantillons, chaque échantillon étant ensuite dilué à l'eau déminéralisée afin d'obtenir des concentrations différentes permettant de déposer sur le fil à encoller, des taux de colle variant entre 2 et 10%.

### Exemple 4 comparatif

On prépare comme suit une dispersion aqueuse d'un ensemble macromoléculaire obtenu à partir de 17 parties en poids d'un polyester sulfoné et de 83 parties en poids d'une composition monomère (parties en poids de matières sèches).
Dans un réacteur de 6 litres, muni d'un agitateur à ancre, on introduit :
- 1000g d'eau
- 100g de Disperstat PE® (solution à 20% en poids d'ester phosphorique dispersant commercialisé par Stephenson Thompson Textile Chemicals)
- 1700g d'une dispersion aqueuse à 20% en poids d'extrait sec de GEROL PS 30®, polyester sulfoné commercialisé par RHONE-POULENC, présentant
   . une masse molaire moyenne en nombre de 22.000 environ
   . une masse molaire moyenne en poids de 60.000 environ
   . une dureté PERSOZ de **150** environ, mesurée selon la Norme AFNOR NFT 30-016 à 22°C et 85% d'humidité relative
Le mélange est porté à 80°C, sous agitation à 150 tours/minute.
On ajoute 7g de persulfate d'ammonium dissous dans 30g d'eau.
On introduit en continu :

* pendant 4 heures un mélange de
- 1278g d'acrylate de butyle (ABu)
- 266g d'acétate de vinyle
- 116g d'acide acrylique (AA)
- 6g de dodécylmercaptan (DM)
   * pendant 4 heures un mélange de
   - 393g d'eau
   - 5,6g de persulfate d'ammonium
   - 100g de Disperstat PE® à 20%
   les deux introductions en continu démarrant simultanément.
   A la fin des introductions en continu, la température est maintenue pendant 1 heure à 80°C, puis on refroidit.
   On obtient un latex à 41% d'extrait sec. L'ensemble macromoléculaire présente une dureté PERSOZ, mesurée selon la Norme AFNOR NFT 30-016 à 22°C et 85% d'humidité relative, de 21 environ.

Le latex est réparti en plusieurs échantillons, chaque échantillon étant ensuite dilué à l'eau déminéralisée afin d'obtenir des taux d'extrait sec différents permettant de déposer sur le fil à encoller, des taux de colle variant entre 2 et 10%.

### Exemple 4' comparatif

Le latex présentant un taux d'extrait sec de 41% préparé à l'exemple 4, est alcali-solubilisé par addition d'une solution à 20% d'ammoniaque jusqu'à obtenir un pH de l'ordre de 7,5 à 8. La solution obtenue est ensuite répartie en plusieurs échantillons, chaque échantillon étant ensuite dilué à l'eau déminéralisée afin d'obtenir des concentrations différentes permettant de déposer sur le fil à encoller, des taux de colle variant entre 2 et 10%.

### Exemple 5 comparatif

On prépare comme suit une dispersion aqueuse d'un ensemble macromoléculaire obtenu à partir de 20 parties en poids d'un polyester sulfoné et de 80 parties en poids d'une composition monomère (parties en poids de matières sèches).

Dans un réacteur de 6 litres, muni d'un agitateur à ancre, on introduit:
- 1868g d'eau
- 79g de Disperstat PE® (solution à 20% en poids d'ester phosphorique dispersant commercialisé par Stephenson Thompson Textile Chemicals)
- 1050g d'une dispersion aqueuse à 20% en poids d'extrait sec de GEROL PS 30®, polyester sulfoné commercialisé par RHONE-POULENC, présentant
   . une masse molaire moyenne en nombre de 22.000 environ
   . une masse molaire moyenne en poids de 60.000 environ
   . une dureté PERSOZ de 150 environ, mesurée selon la Norme AFNOR NFT 30-016 à 22°C et 85% d'humidité relative
   Le mélange est porté à 80°C, sous agitation à 150 tours/minute.
   On ajoute 3,7g de persulfate d'ammonium dissous dans 30g d'eau.
   On introduit en continu :
   * pendant 4 heures un mélange de
      - 504g d'acrylate de butyle (ABu)
      - 126g de styrène (S)
      - 210g d'acide acrylique (AA)
      - 3,1g de dodécylmercaptan (DM)
   * pendant 4 heures un mélange de
      - 393g d'eau
      - 3g de persulfate d'ammonium
      - 79g de Disperstat PE® à 20%
      les deux introductions en continu démarrant simultanément.

A la fin des introductions en continu, la température est maintenue pendant 1 heure à 80°C, puis on refroidit. On obtient un latex à 25% d'extrait sec. L'ensemble macromoléculaire présente une dureté PERSOZ, mesurée selon la Norme AFNOR NFT 30-016 à 22°C et 85% d'humidité relative, de 13 environ.

Le latex est réparti en plusieurs échantillons, chaque échantillon étant ensuite dilué à l'eau déminéralisée afin d'obtenir des taux d'extrait sec différents permettant de déposer sur le fil à encoller, des taux de colle variant entre 2 et 10%.

### Exemple 6 comparatif

Dans un réacteur de 6 litres, muni d'un agitateur à ancre, on introduit:
- 1500g d'eau
- 100g de Disperstat PE® (solution à 20% en poids d'ester phosphorique dispersant commercialisé par Stephenson Thompson Textile Chemicals)
Le mélange est porté à 80°C, sous agitation à 150 tours/minute.
On ajoute 3,2g de persulfate d'ammonium dissous dans 30g d'eau.

On introduit en continu :
* pendant 4 heures un mélange de
- 960g d'acrylate de butyle (ABu)
- 240g de styrène (S)
- 400g d'acide méthacrylique (AMA)
- 1 g de dodécylmercaptan (DM)
   * pendant 4 heures un mélange de

- 393g d'eau
- 3g de persulfate d'ammonium
- 100g de Disperstat PE® à 20%
les deux introductions en continu démarrant simultanément.

A la fin des introductions en continu, la température est maintenue pendant 1 heure à 80°C, puis on refroidit. On obtient un latex à 43% d'extrait sec. Le latex est réparti en plusieurs échantillons, chaque échantillon étant ensuite dilué à l'eau déminéralisée afin d'obtenir des taux d'extrait sec différents permettant de déposer sur le fil à encoller, des taux de colle variant entre 2 et 10%.

### Exemple 6' comparatif

Le latex présentant un taux d'extrait sec de 43% préparé à l'exemple 6, est alcali-solubilisé par addition d'une solution à 20% d'ammoniaque jusqu'à obtenir un pH de l'ordre de 7,5 à 8. La solution obtenue est ensuite répartie en plusieurs échantillons, chaque échantillon étant ensuite dilué à l'eau déminéralisée afin d'obtenir des concentrations différentes permettant de déposer sur le fil à encoller, des taux de colle variant entre 2 et 10%.

### Exemple 7

On prépare une dispersion aqueuse d'un ensemble macromoléculaire constitué de 20 parties en poids de polyester sulfoné et 80 parties en poids de copolymère (métha)acrylique, par mélange de 1000g du latex de copolymère (méth)acrylique préparé à l'exemple 6 et de 430g d'une dispersion aqueuse à 25% en poids d'extrait sec de GEROL PS 30®; le mélange est préparé sous agitation à température ambiante. On obtient une dispersion aqueuse à 37,6% d'extrait sec. L'ensemble macromoléculaire présente une dureté PERSOZ, mesurée selon la Norme AFNOR NFT 30-016 à 22°C et 85% d'humidité relative, de 190 environ. La dispersion aqueuse est répartie en plusieurs échantillons, chaque échantillon étant ensuite dilué à l'eau déminéralisée afin d'obtenir des taux d'extrait sec différents permettant de déposer sur le fil à encoller, des taux de colle variant entre 2 et 10%.

Des essais d'encollage ont été réalisés à l'aide de bains de colle constitués des dispersions aqueuses (latex) ou des solutions alcalines préparées aux exemples ci-dessus ; de même des essais ont été réalisés à partir d'une dispersion aqueuse à 25% en poids d'extrait sec de GEROL PS 30®, diluée pour permettre de déposer sur le fil à encoler des taux de colle variant entre 2 et 10%.

### Opération d'encollage

L'opération d'encollage est réalisée à l'aide d'une machine de laboratoire de type fil à fil, de conception Rhône-Poulenc. La vitesse d'encollage est de 50 m/minute ; on encolle environ 7000 mètres de polyester plat non texturé, de type 100/88/0 de Rhône-Poulenc Fibres. Trois opérations d'encollage sont réalisées pour chacun des produits à tester ; les concentrations du bain d'encollage sont optimisées afin de déposer sur le fil une quantité de colle comprise entre 2 et 10% en poids de l'ensemble macromoléculaire (matière sèche) par rapport à la masse du fil. Le principe de l'opération est le suivant : le fil de polyester est immergé dans le bain de colle, puis séché par passage dans une chambre chauffée à 130°C. Après refroidissement, le fil est enroulé sur une bobine de laboratoire. La qualité de l'encollage est appréciée au vu de deux tests applicatifs :
- un test dit d' "indice de cohésion" mesurant l'aptitude du polymère à coller entre eux les brins unitaires formant le fil
- un test dit de "blocking" estimant le collage inter-fils lors du dévidage de la bobine de fil encollé.

### Test d'indice de cohésion

Ce test est réalisé à l'aide de l'appareil SHIRLEY FILAMENT COUNTER mis au point par le SHIRLEY INSTITUT de Manchester. Celui-ci a fait l'objet d'une publication au AATCC Symposium du 26-27 Avril 1993 à Asheville en Caroline du Nord - "Measure of a size efficiency on filament yams : cohesive index test" par Y. Girardeau et C. Vidil. Lors de la mesure, l'appareil enregistre et décompte les vibrations émises lors du sectionnement des éléments individualisés constitués d'un brin unitaire ou de plusieurs brins collés.

L'indice de cohésion C est exprimé par la relation C = 100 (n-x) 1 (n-1) où
. n représente le nombre de brins unitaires constituant le fil, ici 88
. x représente le nombre d'éléments individualisés décomptés

En l'absence de colle tous les brins unitaires sont individualisés; x est alors égal à n et C est égal à 0.

La cohésion est maximale quand tous les brins unitaires sont liés ; x est alors égal à 1 et C est égal à 100.

L'indice de cohésion est déterminé sur des bobines de fil encollé, après stokage des bobines pendant au moins 8 jours à 65% d'humidité relative et à une température de 22°C

Cet indice est mesuré avant et après travail sur un usomètre WEBTESTER de l'Institut Textile de Denckendorf (mesure après 50,150 et 300 cycles), simulant les contraintes subies par le fil lors de l'opération de tissage.

On établit ensuite, pour chacun des produits étudiés, au taux de colle considéré (4% et 6%), une courbe traduisant la perte de cohésion du fil encollé en fonction du travail subi (abrasion).

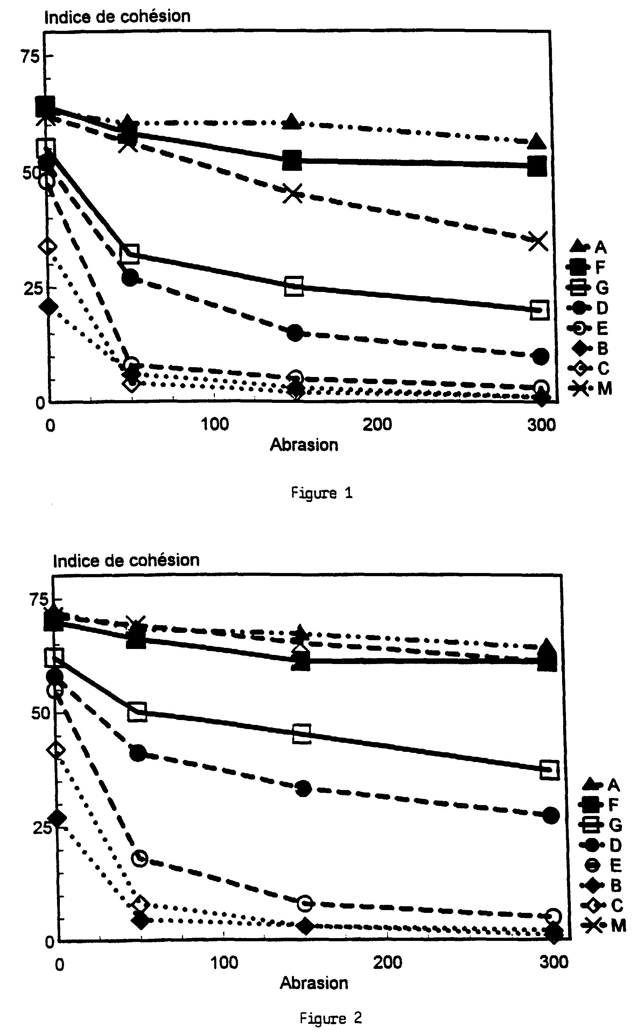

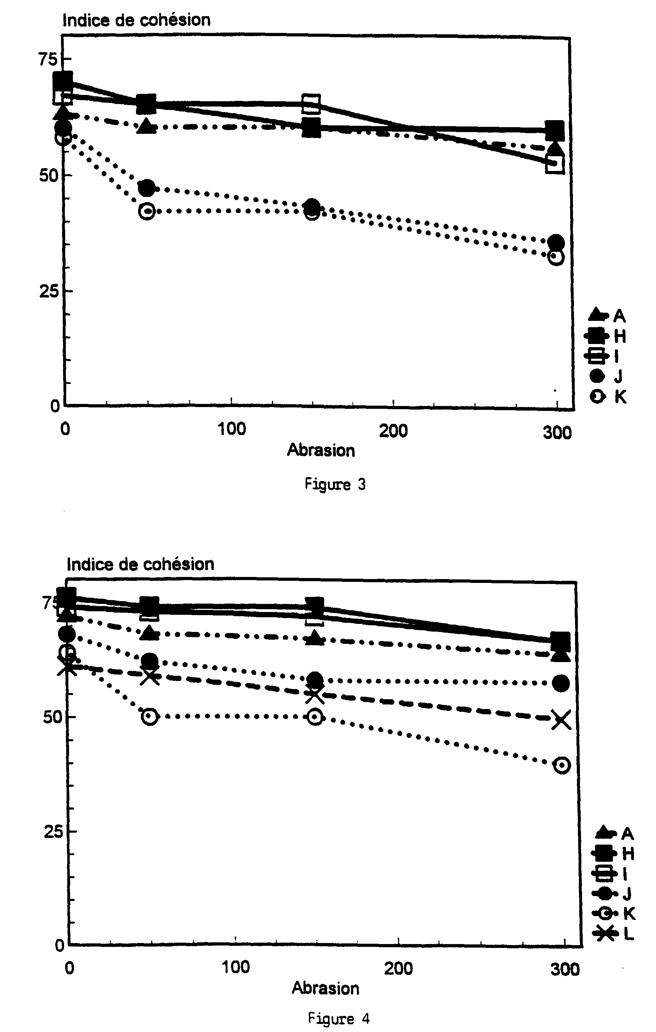

Les figures 1 et 3 représentent les courbes établies pour un taux de colle sur le fil de 4% ; Les figures 2 et 4 représentent les courbes établies pour un taux de colle sur le fil de 6%.

On donne ci-après les références des courbes correspondant aux produits testés

| Produit de l'exemple | Référence |
|---|---|
| 1 | F |
| 1' comparatif | G |
| 2 | D |
| 2' comparatif | E |
| 3 comparatif | H |
| 3' comparatif | I |
| 4 comparatif | J |
| 4' comparatif | K |
| 5 comparatif | L |
| 6 comparatif | B |
| 6' comparatif | C |
| 7 | M |
| GEROL PS 30® | A |

Les figures 1 et 2 permettent de comparer les performances en test de cohésion des latex de l'invention D, F, et M à celles
- de leur formes alcali-solubilisées E et G
- du GEROL PS 30® A
- du latex copolymère styrène/acrylique B
- de la forme alcali-solubilisée du latex copolymère styrène/acrylique C
On constate que les performances de cohésion:
· des formes latex sont supérieures à celles des formes alcali-solubilisées correspondantes.
· des formes latex de l'invention D, F et M sont bien supérieures à celles de la forme latex copolymère styrène/acrylique B . de la forme latex de l'invention F (20% en poids de GEROL PS 30®) sont voisines de celles du GEROL PS 30®.

Les figures 3 et 4 montrent que les performances de cohésion des formes latex hors de l'invention H, J et L (20% en poids de GEROL PS 30® ), ainsi que celles de leurs formes alcali-solubilisées sont voisines de celles du GEROL PS 30®. A taux de GEROL PS 30® équivalent, les performances de cohésion des formes latex de l'invention F et M sont voisines de celles des formes latex hors de l'invention H, J et L, et voisines de celles du GEROL PS 30®.

### Test de blocking

Ce test est réalisé à l'aide de l'appareil DEVIGRAPH µP 600 de conception Rhône-Poulenc (conçu au départ pour contrôler la dévidabilité des fils textiles).

Cet appareil enregistre les variations de tension lors du dévidage d'une bobine de fil encollé.

L'opération de dévidage de la bobine de fil encollé est réalisée à une vitesse de de 300 m/mn ; plus la colle a tendance à créer du "blocking", plus les variations de tension sont importantes ; on enregistre les à-coups de tension supérieurs à un seuil de 3g sur une longueur de fil de 3000m (durée de dévidage de 10 minutes)

Ce test est réalisé à différents taux de colle sur le fil, après conditionnement des bobines en atmosphère contrôlée (22°C et 65% ou 85% d'humidité relative) pendant au moins 8 jours,

Les figures 5 à 7 représentent pour chacun des produits testés, le nombre d'à-coups de tension/10minutes enregistré pour chaque taux de colle déposé sur le fil considéré (entre 2% et 10%).

La figure 5 permet de comparer les performances en test de blocking des latex de l'invention D, F, et M à celles
- du GEROL PS 30® A
- du latex copolymère styrènelacrylique B

On constate que les latex de l'invention D, F, et M présentent un blocking inférieur à celui du GEROL PS 30®, et aussi faible que celui du latex copolymère styrènelacrylique B.

La figure 6 présente les performances en test de blocking des formes alcali-solubles E et G , comparées à celles
- du GEROL PS 30® A
- de la forme alcali-soluble du latex copolymère styrène/acrylique C

On constate que les formes alcali-solubilisées présentent un blocking voisin de ou plus élevé que celui du GEROL PS 30®.

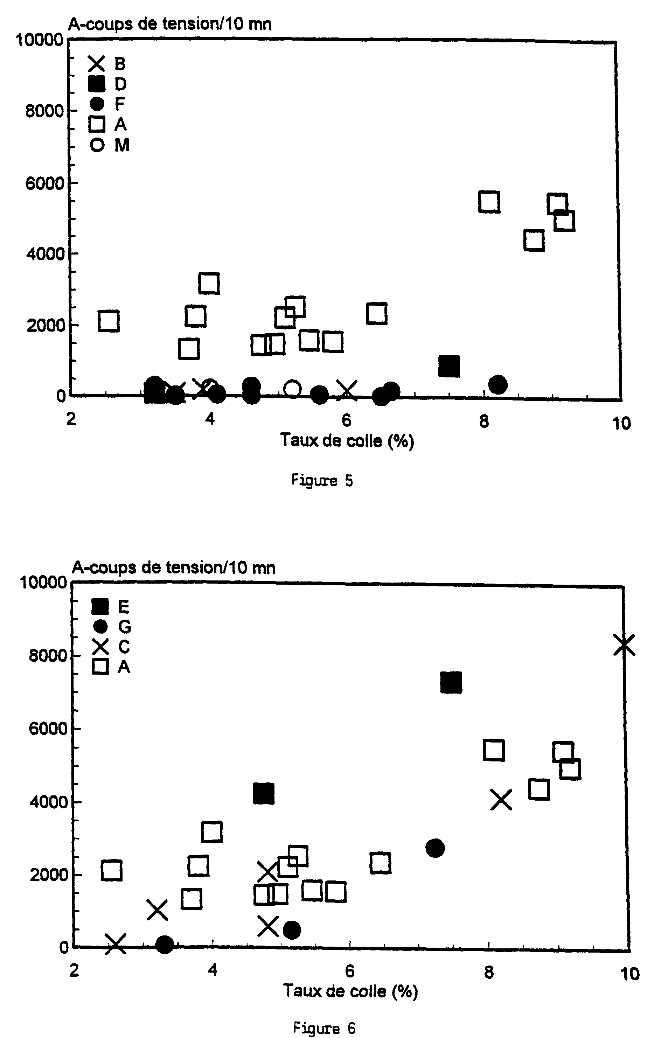

Les performances des latex comparatifs et de leurs formes alcali-solubilisées (H, I, J et K) n'ont pu être portées sur la figure 5, car, en raison de leur dureté insuffisante, leur niveau de blocking sous forme latex, devient trop important au delà d'un taux de colle relativement faible (3 à 5% selon le cas); la tension moyenne de dévidage devient alors supérieure à 3g, ce qui rend la comptabilisation des à-coups de tension supérieure à 3g denuée de sens.

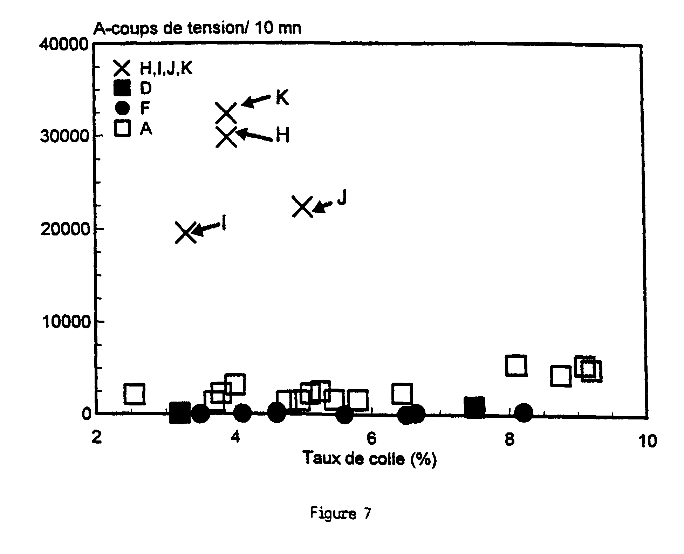

On a porté sur la figure 7 le niveau de blocking de ces latex comparatifs et de leurs formes alcali-solubilisées (H, I, J et K) pour 1 seul taux de colle relativement faible, taux pour lequel l'interprétation reste possible.

On constate que le niveau de blocking des latex comparatifs est d'au moins 20000 à-coups de tension/10 minutes pour un taux de colle inférieur à 5%, alors que celui des latex de l'invention est inférieur à 1000 à-coups de tension/10 minutes pour un taux de colle plus élevé, et celui du GEROL PS 30® est compris entre 1000 et 6000 à-coups de tension/10 minutes.

Les performances du latex comparatif L n'ont pu être mesurées, car le blocking est tel qu'il entraîne des casses régulières lors du dévidage du fil encollé.

Une analyse complète des résultats des test de cohésion et de blocking donnés ci-dessus, permet de constater que les latex de l'invention présentent
1) - des propriétés de cohésion (pour un taux de GEROL PS 30® de 20%) voisines de celles du GEROL PS 30®, avec un blocking (quelque soit le taux de GEROL PS 30®) inférieur à celui du GEROL PS 30® et aussi faible que celui d'un latex acrylique
2) - des propriétés de cohésion voisines de ou supérieures à celles des formes alcali-solubilisées, avec un blocking moins important.
3) à taux de GEROL PS 30® équivalent, des propriétés de cohésion voisines de celles des formes latex de dureté inférieure, avec un blocking nettement moins important.

Seuls les latex de l'invention présentent donc des propriétés de cohésion et de blocking optimales.

## Revendications

1. Procédé d'encollage des chaînes de fils (yarns) textiles, qui consiste:
a) à immerger à la température désirée, de préférence inférieure à 40°C, lesdits fils dans un latex aqueux d'un ensemble macromoléculaire comprenant un copolymère (meth)acrylique préparé à partir d'une composition monomère à base d'au moins un ester acrylique et/ou méthacrylique et d'au moins un acide carboxylique éthyléniquement insaturé,
- ledit copolymère (meth)acrylique se présentant, dans l'ensemble macromoléculaire, en mélange avec ou au moins partiellement gréffé sur un polyester sulfoné hydrodispersable,
b) puis à essorer lesdits fils par passage entre des rouleaux essoreurs et
c) enfin à sécher lesdits fils encollés sur cylindres chauffants, éventuellement par passage préalable dans des chambres chaudes,
caractérisé en ce que ledit polyester sulfoné hydrodispersable présente une dureté PERSOZ d'au moins 60, de préférence de l'ordre de 80 à 300, dureté mesurée selon la Norme AFNOR NFT 30-016 à 22°C et 85% d'humidité relative,
- en ce que la teneur pondérale de l'ensemble macromoléculaire en motifs dérivés dudit acide carboxylique éthyléniquement insaturé, est d'au moins environ 10%, de préférence de l'ordre de 12 à 30%, et tout particulièrement de l'ordre de 15 à 25%, exprimée en poids de matière séche,
- et en ce que la nature dudit copolymère (meth)acrylique est telle que l'ensemble macromoléculaire présente une dureté PERSOZ au moins égale à celle dudit polyester sulfoné hydrodispersable, de préférence de l'ordre de 1 à 3 fois, et tout particulièrement de l'ordre de 1 à 2 fois celle dudit polyester sulfoné hydrodispersable.

2. Procédé selon la revendication 1), caractérisé en ce que l'ensemble macromoléculaire est constitué d'environ 95 à 50 parties, de préférence d'environ 90 à 60 parties et tout particulièrement d'environ 90 à 75 parties en poids de copolymère (meth)acrylique en mélange avec ou au moins partiellement greffé sur environ 5 à 50 parties, de préférence environ 10 à 40 parties et tout particulièrement environ 10 à 25 parties en poids de polyester sulfoné hydrodispersable.

3. Procédé selon la revendication 1) ou 2) caractérisé en ce que le latex présente une teneur en matières sèches de l'ordre de 5 à 50 % en poids, de préférence de l'ordre de 20 à 45 % en poids.

4. Procédé selon l'une quelconque des revendications précédentes, caractérisé en ce que les esters acryliques et/ou méthacryliques sont choisis parmi les acrylates ou méthacrylates d'alkyle en C₁-C₂₀, les acides carboxyliques éthyléniquement insaturés sont choisis parmi les acides acrylique, méthacrylique, crotonique, maleïque, fumarique, itaconique, et en ce que ladite composition monomère comprend éventuellement au moins un ester insaturé d'acide carboxylique saturé, du styrène, de l'acrylonitrile, de l'acrylamide.

5. Procédé selon l'une quelconque des revendications précédentes, caractérisé en ce que la composition monomère contient de l'ordre de 25 à 70%, et de préférence de l'ordre de 40 à 60% de son poids d'acrylate de butyle.

6. Procédé selon l'une quelconque des revendications précédentes, caractérisé en ce que le polyester sulfoné hydrodispersable dérive de l'estérification et /ou transestérification d'au moins un diacide carboxylique, un de ses diesters ou son anhydride et d'au moins un diester diacide organique sulfoné ou l'un de ses diesters, avec un diol, et polycondensation.

7. Procédé selon la revendication 6) caractérisé en ce que le polyester sulfoné hydrodispersable dérive de l'estérification et /ou transestérification de l'acide téréphtalique et/ou isophtalique ou de leur diester méthylique et de l'acide sulfoisophtalique ou de son diester méthylique, avec du monoéthylène glycol et/ou diéthylène glycol, et polycondensation.

8. Procédé selon l'une quelconque des revendications précédentes, caractérisé en ce que le polyester sulfoné hydrodispersable présente une masse moléculaire moyenne en nombre de l'ordre de 15 000 à 35 000, de préférence de l'ordre de 20 000 à 35 000, un indice d'acide inférieur à 5mg de KOH/g, un taux de soufre de l'ordre de 0,8 à 2% en poids, de préférence de l'ordre de 1,5 à 2% en poids.

9. Procédé selon l'une quelconque des revendications précédentes, caractérisée en ce que le latex est obtenu par polymérisation en émulsion aqueuse de la composition monomère, ledit polyester sulfoné hydrodispersable étant soit ajouté à la dispersion (latex) de copolymère (meth)acrylique obtenue après polymérisation, soit introduit au cours de l'opération de polymérisation en émulsion aqueuse de la composition monomère, et en ce que le latex est ensuite éventuellement dilué.

10. Procédé selon la revendication 9), caractérisé en ce que la quantité de polyester sulfoné hydrodispersable additionnée au latex de copolymère acrylique et/ou méthacrylique ou introduite au cours de l'opération de polymérisation en émulsion de la composition monomère, est de l'ordre de 5 à 50 parties, de préférence de l'ordre de 10 à 40 parties et tout particulièrement de l'ordre de 10 à 25 parties en poids pour 95 à 50 parties, de préférence de 90 à 60 parties et tout particulièrement de 90 à 75 parties en poids de copolymère (meth)acrylique ou de composition monomère.

11. Procédé selon l'une quelconque des revendications 9) ou 10), caractérisé en ce que l'opération de polymérisation en émulsion aqueuse est réalisée en présence d'un amorceur de polymérisation choisi parmi les amorceurs solubles ou dispersables dans l'eau ou dans la composition monomère, d'un émulsifiant et éventuellement d'un agent limiteur de chaîne.

## Patentansprüche

1. Verfahren zum Schlichten von Textilgarnketten (yarns), das darin besteht:
a) besagte Garne bei der gewünschten Temperatur, die vorzugsweise niedriger als 40 °C ist, in einen wäßrigen Latex aus einem makromolekularen System, das ein (Meth)acrylcopolymer umfaßt, welches aus einer Monomerzusammensetzung auf der Basis wenigstens eines Acryl- und/oder Methacrylesters und wenigstens einer ethylenisch ungesättigten Carbonsäure hergestellt ist einzutauchen,
wobei besagtes (Meth)acrylcopolymer in dem makromolekularen System im Gemisch mit oder wenigstens teilweise gepfropft auf einen in Wasser dispergierbaren Polysulfonester vorliegt,
b) dann besagte Garne durch Passieren zwischen Quetschwalzen zu pressen und
c) schließlich besagte geschlichtete Garne auf Heizwalzen, gegebenenfalls unter vorherigem Durchgang durch Wärmekammern, zu trocknen,
dadurch gekennzeichnet, daß besagter in Wasser dispergierbarer Polysulfonester eine PERSOZ-Härte von wenigstens 60, vorzugsweise in der Größenordnung von 80 bis 300 aufweist, Härte gemessen gemäß der Norm AFNOR NFT 30-016 bei 22 °C und 85% relativer Feuchtigkeit,
und dadurch, daß der Gewichtsgehalt des makromolekularen Systems an Einheiten, die von besagter ethylenisch ungesättigter Carbonsäure abgeleitet sind, wenigstens etwa 10% beträgt, vorzugsweise in der Größenordnung von 12 bis 30% und ganz besonders in der Größenordnung von 15 bis 25%, ausgedrückt in Gewicht an Trockensubstanz, liegt,
und dadurch, daß die Beschaffenheit besagten (Meth)acrylcopolymers so ist, daß das makromolekulare System eine PERSOZ-Härte aufweist, die wenigstens gleich derjenigen des in Wasser dispergierbaren Polysulfonesters ist, vorzugsweise in der Größenordnung des 1 bis 3fachen und ganz besonders in der Größenordnung des 1 bis 2fachen derjenigen des in Wasser dispergierbaren Polysulfonesters liegt.

2. Verfahren gemäß Anspruch 1, dadurch gekennzeichnet, daß das makromolekulare System aus etwa 95 bis 50 Gewichtsteilen, vorzugsweise etwa 90 bis 60 Gewichtsteilen und ganz besonders etwa 90 bis 75 Gewichtsteilen (Meth)acrylcopolymer im Gemisch mit oder wenigstens teilweise gepfropft auf etwa 5 bis 50 Gewichtsteile, vorzugsweise etwa 10 bis 40 Gewichtsteile und ganz besonders etwa 10 bis 25 Gewichtsteile in Wasser dispergierbarem Polysulfonester besteht.

3. Verfahren gemäß Anspruch 1 oder 2, dadurch gekennzeichnet, daß der Latex einen Gehalt an Trockensubstanzen in der Größenordnung von 5 bis 50 Gew.-%, vorzugsweise in der Größenordnung von 20 bis 45 Gew.-% aufweist.

4. Verfahren gemäß einem der vorhergehenden Ansprüche, dadurch gekennzeichnet, daß die Acryl- und/oder Methacrylester unter den C₁-C₂₀-Alkylacrylaten oder -methacrylaten ausgewählt sind, die ethylenisch ungesättigten Carbonsäuren unter Acryl-, Methacryl-, Croton-, Malein-, Fumar-, Itaconsäure ausgewählt sind, und dadurch, daß besagte Monomerzusammensetzung gegebenenfalls wenigstens einen ungesättigten Ester einer gesättigten Carbonsäure, Styrol, Acrylnitril, Acrylamid umfaßt.

5. Verfahren gemäß einem der vorhergehenden Ansprüche, dadurch gekennzeichnet, daß die Monomerzusammensetzung Butylacrylat in der Größenordnung von 25 bis 70% und vorzugsweise in der Größenordnung von 40 bis 60% ihres Gewichts enthält.

6. Verfahren gemäß einem der vorhergehenden Ansprüche, dadurch gekennzeichnet, daß der in Wasser dispergierbare Polysulfonester aus der Veresterung und/oder Umesterung wenigstens einer Dicarbonsäure, eines ihrer Diester oder ihres Anhydrids und wenigstens einer organischen Disulfonsäure oder eines ihrer Diester mit einem Diol und Polykondensation stammt.

7. Verfahren gemäß Anspruch 6, dadurch gekennzeichnet, daß der in Wasser dispergierbare Polysulfonester aus der Veresterung und/oder Umesterung von Terephthal- und/oder Isophthalsäure oder ihres Methyldiesters und von Sulfoisophthalsäure oder ihres Methyldiesters mit Monoethylenglykol und/oder Diethylenglykol und Polykondensation stammt.

8. Verfahren gemäß einem der vorhergehenden Ansprüche, dadurch gekennzeichnet, daß der in Wasser dispergierbare Polysulfonester ein Zahlenmittel der Molekülmasse in der Größenordnung von 15 000 bis 35 000, vorzugsweise in der Größenordnung von 20 000 bis 35 000, eine Säurezahl kleiner als 5 mg KOH/g, einen Schwefelgehalt in der Größenordnung von 0,8 bis 2 Gew.-%, vorzugsweise in der Größenordnung von 1,5 bis 2 Gew.-% aufweist.

9. Verfahren gemäß einem der vorhergehenden Ansprüche, dadurch gekennzeichnet, daß der Latex durch Polymerisation in wäßriger Emulsion der Monomerzusammensetzung erhalten wird, wobei der in Wasser dispergierbare Polysulfonester entweder zur nach Polymerisation erhaltenen (Meth)acrylcopolymer-Dispersion (Latex), hinzugefügt wird oder im Verlauf des Vorgangs der Polymerisation in wäßriger Emulsion der Monomerzusammensetzung eingeführt wird, und dadurch, daß der Latex anschließend gegebenenfalls verdünnt wird.

10. Verfahren gemäß Anspruch 9, dadurch gekennzeichnet, daß die Menge an in Wasser dispergierbarem Polysulfonester, die dem Acryl- und/oder Methacrylcopolymer-Latex zugefügt oder im Verlauf des Vorgangs der Polymerisation in Emulsion der Monomerzusammensetzung eingeführt wird, in der Größenordnung von 5 bis 50 Gewichtsteilen, vorzugsweise in der Größenordnung von 10 bis 40 Gewichtsteilen und ganz besonders in der Größenordnung von 10 bis 25 Gewichtsteilen pro 95 bis 50 Gewichtsteile, vorzugsweise 90 bis 60 Gewichtsteile und ganz besonders 90 bis 75 Gewichtsteile (Meth)acrylcopolymer oder Monomerzusammensetzung liegt.

11. Verfahren gemäß einem der Ansprüche 9 oder 10, dadurch gekennzeichnet, daß der Vorgang der Polymerisation in wäßriger Emulsion in Gegenwart eines Polymerisationsinitiators, der unter den in Wasser oder in der Monomerzusammensetzung löslichen oder dispergierbaren Initiatoren ausgewählt ist, eines Emulgators und gegebenenfalls eines Kettenbegrenzungsmittels durchgeführt wird.

## Claims

1. Process for sizing warps of textile yarns, which consists:
a) in immersing, at the desired temperature, preferably less than 40°C, the said yarns in an aqueous latex of a macromolecular combination comprising a (meth)acrylic copolymer prepared from a monomer composition based on at least one acrylic and/or methacrylic ester and on at least one ethylenically unsaturated carboxylic acid, - the said (meth)acrylic copolymer existing, in the macromolecular combination, as a mixture with or at least partially grafted onto a water-dispersible sulphonated polyester,
b) in then squeezing the said yarns by passing between squeezing rollers, and
c) finally in drying the said sized yarns on heating cylinders, optionally by passing beforehand into drying chambers,
characterized in that the said water-dispersible sulphonated polyester has a Persoz hardness of at least 60, preferably of the order of 80 to 300, which hardness is measured according to the AFNOR standard NFT 30-016 at 22°C and 85% relative humidity,
- in that the content by weight of the macromolecular combination in units derived from the said ethylonically unsaturated carboxylic acid is at least approximately 10%, preferably of the order of 12 to 30% and very particularly of the order of 15 to 25%, expressed by weight of solids,
- and in that the nature of the said (meth)acrylic copolymer is such that the macromolecular combination has a Persoz hardness at least equal to that of the said water-dispersible sulphonated polyester, preferably of the order of 1 to 3 times and very particularly of the order of 1 to 2 times that of the said water-dispersible sulphonated polyester.

2. Process according to claim 1, characterized in that the macromolecular combination consists of approximately 95 to 50 parts, preferably of approximately 90 to 60 parts and very particularly of approximately 90 to 75 parts by weight of (meth)acrylic copolymer as a mixture with or at least partially grafted onto approximately 5 to 50 parts, preferably approximately 10 to 40 parts and very particularly approximately 10 to 25 parts by weight of water-dispersible sulphonated polyester.

3. Process according to claim 1 or 2, characterized in that the latex has a solids level of the order of 5 to 50% by weight and preferably of the order of 20 to 45% by weight.

4. Process according to any one of the preceding claims, characterized in that the acrylic and/or methacrylic esters are chosen from C₁-C₂₀ alkyl acrylates or methacrylates, and the ethylenically unsaturated carboxylic acids are chosen from acrylic, methacrylic, crotonic, maleic, fumaric and itaconic acids and in that the said monomer composition optionally comprises at least one unsaturated ester of saturated carboxylic acid, styrene, acrylonitrile or acrylamide.

5. Process according to any one of the preceding claims, characterized in that the monomer composition contains of the order of 25 to 70% and preferably of the order of 40 to 60% of its weight of butyl acrylate.

6. Process according to any one of the preceding claims, characterized in that the water-dispersible sulphonated polyester derives from the esterification and/or transesterification of at least one dicarboxylic acid, one of its diesters or its anhydride and of at least one sulphonated organic diacid or one of its diesters with a diol, and polycondensation.

7. Process according to claim 6, characterized in that the water-dispersible sulphonated polyester derives from the esterification and/or transesterification of terephthalic and/or isophthalic acid or of their methyl diester and of sulphoisophthalic acid or of its methyl diester with monoethylene glycol and/or diethylene glycol, and polycondensation.

8. Process according to any one of the preceding claims, characterized in that the water-dispersible sulphonated polyester has a number-average molecular mass of the order of 15,000 to 35,000 and preferably of the order of 20,000 to 35,000, an acid number of less than 5 mg of KOH/g and a sulphur level of the order of 0.8 to 2% by weight and preferably of the order of 1.5 to 2% by weight.

9. Process according to any one of the preceding claims, characterized in that the latex is obtained by aqueous emulsion polymerization of the monomer composition, the said water-dispersible sulphonated polyester either being added to the dispersion (latex) of (meth)acrylic copolymer obtained after polymerization or introduced during the operation of aqueous emulsion polymerization of the monomer composition and in that the latex is then optionally diluted.

10. Process according to claim 9, characterized in that the amount of water-dispersible sulphonated polyester added to the acrylic and/or methacrylic copolymer latex or introduced during the emulsion polymerization operation of the monomer composition is of the order of 5 to 50 parts, preferably of the order of 10 to 40 parts and very particularly of the order of 10 to 25 parts by weight per 95 to 50 parts, preferably from 90 to 60 parts and very particularly from 90 to 75 parts by weight of (meth)acrylic copolymer or of monomer composition.

11. Process according to either of claims 9 and 10, characterized in that the aqueous emulsion polymerization operation is carried out in the presence of a polymerization initiator chosen from initiators which are soluble or dispersible in water or in the monomer composition, of an emulsifying agent and optionally of a chain-limiting agent.
